# EUROPÄISCHE PATENTANMELDUNG

(11) **EP 1 524 521 A1**
(43) Veröffentlichungstag der Anmeldung: **20.04.2005**
(21) Anmeldenummer: 03027326.2
(22) Anmeldetag: 26.11.2003
(51) Int. Cl.: G01N 31/16

(54) **Verfahren und Vorrichtung zur gravimetrischen Titration mittels eines Rührers und/oder einer Pumpe**

(30) Priorität: 14.10.2003 EP 03023257
(71) Anmelder: Precisa Instruments AG, 8953 Dietikon (CH)
(72) Erfinder: Bühler, René, c/o Precisa Instrument AG, 8953 Dietikon (CH); Huber, Rudolf, c/o Precisa Instruments AG, 8953 Dietikon (CH)
(74) Vertreter: Rupp, Christian, Dipl.Phys.

(57) **Zusammenfassung**

Die Erfindung betrifft eine Titrationsvorrichtung (1) und ein Titrationsverfahren, und eignet sich dabei insbesondere zur gravimetrischen Titration. Einer Probenlösung (3), die sich in einem Gefäß (2) befindet, wird dabei mittels Schlauchpumpe (8) über eine Kapillare (6), die während der Titration mit einem offenen Ende in die Probenlösung (3) eintaucht, eine Maßlösung (5) aus einem Vorratsbehälter (4) in definierter Weise zugeführt. Im unmittelbaren Austrittsbereich der Maßlösung im Gefäß (2) wird die Flüssigkeit mittels eines Rührers (20) gerührt. Dadurch werden die sich am Auslass (15) der Kapillare ansatzweise bildenden Tröpfchen abgeschlagen, bevor sie sich selbstständig voll ausbilden. Auf diese Weise wird die Dosiereinheit derart verkleinert, dass von einer quasi-kontinuierlichen Zufuhr von Maßlösung (5) in die Probenlösung (3) gesprochen werden kann. Dies ermöglicht eine besonders große Meßgenauigkeit bei der Titration. Zur Bestimmung der Menge an zugeführter Maßlösung (5) wird während des Titrationsvorgangs das Gefäß (2) mit dementsprechend zunehmendem Inhalt und/oder der Vorratsbehälter (4) mit entsprechend abnehmendem Inhalt gewogen.

## Beschreibung

Die vorliegende Erfindung betrifft eine Vorrichtung sowie ein Verfahren zur Titration, insbesondere zur gravimetrischen Titration.

Bei der Titration handelt es sich dabei um ein chemisches Verfahren aus dem Bereich der quantitativen Analyse (Maßanalyse), mit der sich die Menge einer Substanz bestimmen lässt, die in einer Probenlösung von bekannter Menge gelöst ist. Der Probenlösung wird dazu nach und nach mithilfe einer Bürette oder einer Kapillare eine Reagenzlösung (Maßlösung) mit bekanntem chemischen Wirkungsgrad zugeführt. Die Reagenzlösung oder Maßlösung enthält dabei eine Verbindung (Reagenzmittel), die mit der Substanz in der Probenlösung reagiert. Beispielsweise kann es sich bei der Substanz um eine Base und bei dem Reagenzmittel um eine Säure handeln (Säure-Basen-Titration).

Die Genauigkeit der Titration hängt nicht zuletzt von der Erfassung der Menge der zugeführten Maßlösung ab. Dies kann insbesondere durch eine Volumenmessung (volumetrisch) oder durch Wiegen (gravimetrisch) erfolgen.

Die Titration wird so lange fortgesetzt, bis die Menge des zugesetzten Reagenzmittels der gesuchten Menge der Substanz chemisch äquivalent ist. Dies ist im sogenannten Äquivalenzpunkt oder stöchiometrischen Punkt der Fall. Beispielsweise ist der Äquivalenzpunkt im Fall einer Titration einer starken Säure mit einer starken Base im Neutralpunkt (pH-Wert 7) erreicht.

Unter der Voraussetzung, dass die zugrunde liegende chemische Reaktion ausreichend schnell, quantitativ und eindeutig nach der Stöchiometrie der Reaktionsgleichung verläuft, kann mithilfe des Volumens bzw. des Gewichts der Menge an Reagenzlösung, die bis zum Erreichen des Äquivalentpunktes zugesetzt worden ist, und der ursprünglichen Menge an Probenlösung die zu bestimmende Menge der Substanz berechnet werden.

Zur Bestimmung des Äquivalenzpunktes kann ein geeigneter Indikator eingesetzt werden. Dieser zeigt das Erreichen des Äquivalenzpunktes beispielsweise durch eine Farbänderung an.

Bei der volumetrischen Titration ist es üblich, die Maßlösung in festen Dosiermengen zuzugeben. Durch diese "stufenweise" oder portionsweise erfolgende Zufuhr ist die Genauigkeit prinzipiell begrenzt. Demgegenüber erlaubt die gravimetrische Titration kleinere "Dosiereinheiten", da die Maßlösung mittels Kapillare oder Bürette der Probenlösung zugegeben wird.

In der britischen Patentschrift GB 1,061,670 A sind Vorteile der gravimetrischen Titration gegenüber der volumetrischen Titration dargestellt. Es wird darauf hingewiesen, dass bei der Volumenbestimmung der Maßlösung mittels einer Bürette nur begrenzte Genauigkeit erzielt werden kann; dies gilt insbesondere dann, wenn vergleichsweise wenig Maßlösung aus der Bürette verwendet wird.

Weiterhin wird darauf hingewiesen, dass bei der volumetrischen Methode als Maßlösung eine volumennormale Normallösung verwendet wird. Dabei ist die Konzentration abhängig von der Temperatur. Im Gegensatz dazu verwendet man bei der gravimetrischen Methode als Maßlösung eine Normallösung, die massennormal ist und deren Konzentration dementsprechend nicht temperaturabhängig ist. Auch dieser Umstand läßt bei der gravimetrischen Titration in der Regel eine größere Genauigkeit erzielen.

Auf die Vorzüge der gravimetrischen Titration gegenüber der volumetrischen Titration wird auch in dem Artikel "*Ein Verfahren zur schnellen Analyse von Grundchemikalien*" von Elke Spahn und Dietrich Saur in der *GIT Labor-Fachzeitschrift 8*/*2002* eingegangen.

Aus der erwähnten britischen Patentschrift GB 1,061,670 A und auch aus dem entsprechenden Prioritätsdokument, der schweizer Patentschrift Nr. 450 006 ist ein gravimetrisches Titrationsverfahren bekannt, bei dem die Maßlösung aus einem Vorratsbehälter über eine flexible Leitung und eine Bürettenspitze der Probenlösung zugeführt wird. Die Bürettenspitze ist dabei bezüglich dem Probengefäß feststehend. Die Masse der zugeführten Maßlösung wird durch Wiegen der Maßlösung im Vorratsbehälter ermittelt. Auf diese Weise wird während der Titration eine zeitlich kontinuierlich ablaufende Massenbestimmung der zugeführten Maßlösung ermöglicht.

Die Zuführung der Maßlösung erfolgt gemäß der beiden zuletzt genannten Druckschriften unter Zuhilfenahme der Schwerkraft; das bedeutet, dass der Vorratsbehälter mit der Maßlösung während der Titration derart positioniert sein muss, dass sich der Flüssigkeitsspiegel der Maßlösung oberhalb des Auslasses der Bürettenspitze befindet. Dies ist im Hinblick auf die praktische Durchführung umständlich.

Des Weiteren erfolgt die Zuführung der Maßlösung dabei in Abhängigkeit des Druckes an der Bürettenspitze, also in Abhängigkeit von der Höhendifferenz zwischen dem Flüssigkeitsspiegel der Maßlösung und der Bürettenspitze. Diese Höhendifferenz ändert sich jedoch im Laufe der Titration zwangsläufig, da der Flüssigkeitsspiegel sinkt. Aus diesem Grund ist eine gleichförmige Zufuhr der Maßlösung in die Probenlösung mit dieser Methode nicht möglich. Insbesondere ist auch keine gezielte Regelung der Zufuhr möglich. Eine gezielte Regelung der Zufuhr ist jedoch im Hinblick auf eine erleichterte und genauere Auswertung der Titration erstrebenswert.

Wie oben bereits kurz erwähnt, wird bei der Titration vorausgesetzt, dass die zugrunde liegende Reaktion ausreichend schnell verläuft. In diesem Zusammenhang ist es beispielsweise aus der deutschen Offenlegungsschrift DE 197 12 313 A1 oder aus der veröffentlichten japanischen Patentanmeldung JP H03-243830 A bekannt, in dem Gefäß, das die Probenlösung enthält, am Boden einen Magnetrührer vorzusehen. Durch einen derartigen Magnetrührer kann der Durchmischungsprozess der Probenlösung mit der Maßlösung während der Titration beschleunigt werden.

Bei der gravimetrischen Methode erfolgt die Zugabe der Maßlösung in die Probenlösung - wie oben bereits kurz erwähnt - mithilfe einer Bürette oder einer Kapillare. Dabei bilden sich an dem Endteil der Kapillare, das als offenes Ende den Auslass für die Maßlösung darstellt, aufgrund der Oberflächenspannung der Maßlösung kleine Tröpfchenansätze, die sich nach Erreichen einer bestimmten Größe schließlich von der Kapillare lösen und dann als vollständig ausgebildete Tröpfchen in die Probenlösung vordringen.

Die Menge eines Tröpfchens stellt hierbei also die "Dosiereinheit" dar. Sie ist somit zwar kleiner als bei der üblichen volumetrischen Methode, aber es handelt sich auch hierbei um eine portionsweise Zugabe und in diesem Sinne um einen diskontinuierlichen bzw. "abgestuften" Prozess.

Weiterer Nachteil dieser Tröpfchenbildung ist es, dass die Verteilung der Maßlösung in der Probenlösung dementsprechend inhomogen ist.

Die Genauigkeit der Maßanalyse mittels Titration hängt wesentlich davon ab, wie genau der Äquivalenzpunkt bestimmt werden kann. Insbesondere in der Nähe des Äquivalenzpunktes ist es daher erstrebenswert, möglichst kleine Einheiten an Maßlösung zuzuführen. Dementsprechend ist also eine möglichst kleine Dosiereinheit vorteilhaft. Zudem muss insbesondere in der Nähe des Äquivalenzpunktes damit gerechnet werden, dass die Probenlösung besonders sensitiv auf das Zusetzten der Maßlösung reagiert. Dem steht die oben beschriebene Tröpfchenbildung und die damit verbundene diskontinuierliche Zugabe an Maßlösung in problematischer Weise gegenüber.

Der vorliegenden Erfindung liegt die Aufgabe zugrunde, die Titrationstechnik zu verbessern. Insbesondere soll dabei ermöglicht werden, bei einfacher Bedienung die Meßgenauigkeit, insbesondere bei einer gravimetrischen Titration, zu erhöhen.

Diese Aufgabe wird erfindungsgemäß durch die Merkmale der unabhängigen Ansprüche gelöst. Die abhängigen Ansprüche bilden den zentralen Gedanken der Erfindung in besonders vorteilhafter Weise weiter.

Gemäß einem ersten Aspekt der Erfindung ist eine Titrationsvorrichtung vorgesehen, die ein Gefäß zur Aufnahme einer Probenlösung und eine Kapillare zur definierten Zuführung einer Maßlösung in die Probenlösung aufweist. Dabei wird während der eigentlichen Titration, also während des Zuführens der Maßlösung in die Probenlösung, ein offenes Ende der Kapillare in die Probenlösung eingetaucht gehalten. An diesem offenen Ende tritt also die Maßlösung aus und verbindet sich im Folgenden mit der Probenlösung.

Die Titrationsvorrichtung weist dabei eine Rührvorrichtung auf, mit der die Probenlösung im unmittelbaren Austrittsbereich der Maßlösung aus dem offenen Ende der Kapillare gerührt und dadurch gemischt wird.

Durch die Mischung im unmittelbaren Austrittsbereich kann bewirkt werden, dass sich die Tröpfchenansätze, die sich beim Austritt von Maßlösung am offenen Ende der Kapillare bilden, im Vergleich zu dem Fall ohne ein derartiges Rühren, vorzeitig ablösen und sich mit der Probenlösung vermischen. Die sich ansatzweise bildenden Tröpfchen werden also durch die Aktivität der Rührvorrichtung am offenen Ende der Kapillare abgeschlagen. Auf diese Weise kann eine besonders kleine Dosiereinheit erzielt werden und eine homogene Einmischung von Maßlösung in die Probenlösung erfolgt besonders schnell und effizient.

Als Rührvorrichtung kann dabei vorteilhaft ein einfacher Rührer verwendet werden.

Der Rührer kann weiterhin vorteilhaft auf einer Hohlwelle gelagert sein. Dabei kann die Kapillare durch das Innere der Hohlwelle geführt sein. Das offene Ende der Kapillare kann dabei etwa auf Höhe des unteren Endes der Hohlwelle gehalten sein. Der Rührer kann ebenfalls etwa auf Höhe des unteren Endes der Hohlwelle angeordnet sein. Auf diese Weise wird ein Mischen der Flüssigkeit im unmittelbaren Austrittsbereich der Maßlösung aus der Kapillare vorteilhaft ermöglicht. Die Hohlwelle erfüllt dabei eine Doppelfunktion, da sie einerseits zum Antrieb des Rührers dient und andererseits die Fixierung der Kapillare unterstützt.

Die Rührvorrichtung bzw. der Rührer kann alternativ zu der beschriebenen "Hohlwellen-Anordnung" auch im Bereich neben oder unter dem offenen Ende der Kapillare im unmittelbaren Austrittsbereich der Maßlösung angeordnet sein. Dies ist konstruktionstechnisch einfacher zu realisieren und kann dabei sehr effizient gestaltet werden, da sich die genaue Lage-Positionierung von Rührer zu Auslass leicht und präzise festlegen lässt. Bei der Wahl des Abstands zwischen Auslass und Rührer gibt es dabei keine prinzipiellen Beschränkungen.

Vorteilhaft ist zur Beförderung der Maßlösung durch die Kapillare eine Pumpe, beispielsweise in Form einer Schlauchpumpe vorgesehen. Dies ermöglicht eine definierte Steuerung der Zufuhr von Maßlösung in die Probenlösung.

Besonders vorteilhaft eignet sich die erfindungsgemäße Titrationsvorrichtung zur Durchführung einer gravimetrischen Titration, denn in diesem Fall kann - wie oben dargestellt - aus prinzipiellen Gründen eine höhere Genauigkeit erzielt werden. In diesem Fall weist die Titrationsvorrichtung zur Massenbestimmung wenigstens eine Waage auf.

Beispielsweise kann die Waage zum Wiegen des Gefäßes mit der Probenlösung und insbesondere der Gewichtszunahme, die aufgrund der zugeführten Menge an Maßlösung hervorgerufen wird, verwendet werden.

Vorteilhaft ist für die Aufnahme der Maßlösung ein Vorratsbehälter vorgesehen und alternativ oder bevorzugt zusätzlich zu dem oben erwähnten Wiegen des Gefäßes und seines Inhalts ist eine weitere Waage vorgesehen, mit der der Vorratsbehälter mit seinem Inhalt, also mit der darin befindlichen Maßlösung, gewogen werden kann. Aus der Gewichtsabnahme läßt sich kontinuierlich die in die Probenlösung zugeführte Menge an Maßlösung auf indirekte Weise bestimmen.

Werden beide der beschriebenen Wiege-Vorgänge vorgenommen, ist dies besonders vorteilhaft, da sich durch das redundante Messen der Gewichtszunahme einerseits und der entsprechenden Gewichtsabnahme andererseits eine besonders große Genauigkeit erzielen lässt. Dies ist insbesondere von Bedeutung, weil nicht auszuschließen ist, dass es auf dem Weg der Maßlösung von dem Vorratsbehälter in die Probenlösung zu Verlusten, beispielsweise durch Verdunsten, kommt. Derartige Verluste können unter Zuhilfenahme der beiden beschriebenen Wiege-Vorgänge erfasst und berücksichtigt werden.

Erfahrungsgemäß ist es vorteilhaft, wenn der Innendurchmesser der Kapillare am Auslass etwa 0,1 bis 1,0 Millimeter beträgt.

Falls der Äquivalenzpunkt der Titration vom pH-Wert der Flüssigkeit im Gefäß abhängt, kann vorteilhaft eine Mess-Elektrode, beispielsweise eine Mess-Elektrode, die sensitiv auf Ionen reagiert, verwendet werden. Diese Mess-Elektrode kann mit ihrem Messfühler in die Probenlösung eingetaucht sein.

Zur verbesserten Vermischung der Maßlösung mit der Probenlösung kann weiterhin am Boden des Gefäßes ein Magnetrührer vorgesehen sein. Die Kombination von erfindungsgemäßem Rührer einerseits und bodenseitigem Magnetrührer andererseits ermöglicht eine besonders gute und rasche Durchmischung der Maßlösung mit der Probenlösung, da durch den Rührer die Vermischung im unmittelbaren Auslassbereich der Kapillare erfolgt, während mit dem Magnetrührer die - mit Bezug auf das Gefäß - "großräumige" Vermischung der beiden genannten Flüssigkeiten bewirkt wird.

Gemäß einem weiteren Aspekt der Erfindung ist ein Titrationsverfahren vorgesehen, bei dem eine Maßlösung in definierter Weise mithilfe einer Kapillare einer Probenlösung zugegeben wird. Dabei wird ein offenes Ende der Kapillare, durch welches die Maßlösung in die Probenlösung austritt, während der eigentlichen Titration - also während der Zugabe von Maßlösung - in die Probenlösung eingetaucht gehalten. Das Verfahren ist dadurch gekennzeichnet, dass die Probenlösung im unmittelbaren Austrittsbereich der Maßlösung aus dem offenen Ende der Kapillare gerührt und dadurch gemischt wird.

Das Rühren bzw. Mischen kann während des gesamten Vorgangs des Zuführens von Maßlösung oder aber in zeitlich beschränkter Weise erfolgen, beispielsweise nur dann, wenn sich die Titration dem Äquivalenzpunkt nähert. In diesem Verfahrensabschnitt ist es - wie weiter oben dargestellt - besonders wichtig, eine besonders kleine Dosiereinheit realisieren zu können.

Vorteilhaft wird die Maßlösung durch Pumpen befördert und auf diese Weise die Zugabe durchgeführt. Beispielsweise kann hierzu eine Schlauchpumpe verwendet werden. Das Pumpen ist vorteilhaft, weil es eine genaue Ansteuerung und Regelung der Zugabe ermöglicht.

Vorteilhaft wird die Menge der zugegebenen Maßlösung dadurch ermittelt, dass das Gefäß mit der darin befindlichen Probenlösung und dem jeweils zugegebenen Anteil an Maßlösung zu mehreren Zeitpunkten oder auch kontinuierlich während der Titration gewogen wird.

Alternativ dazu oder zusätzlich dazu kann die Menge der zugegebenen Maßlösung durch entsprechendes Wiegen des Vorratsbehälters mit der darin befindlichen Maßlösung ermittelt werden. Der gemessene Gewichtsverlust sollte dabei im Idealfall der Gewichtszunahme im Gefäß mit der Probenlösung exakt entsprechen.

Besonders vorteilhaft ist es, beide genannten Wiege-Vorgänge auszuführen. Diese redundante Messmethode ermöglicht eine besonders große Meßgenauigkeit für die Titration insgesamt. Insbesondere können möglicherweise auftretende Verluste erfasst werden.

Weiterhin vorteilhaft wird der Maßlösung vorab ein Benetzungsmittel zugesetzt. Auf diese Weise verringert sich die Oberflächenspannung, was dazu führt, dass die Tröpfchen, die sich am offenen Ende der Kapillare ausbilden, nicht so groß anwachsen können, wie im Fall ohne Benetzungsmittel. Somit wird eine weitergehende Verkleinerung der Dosiereinheit bewirkt.

Durch geeignete Wahl des Zusatzes von Benetzungsmittel kann bewirkt werden, dass sich der Wert der Oberflächenspannung der Maßlösung im Bereich der Tröpfchenansätze am offenen Ende, also an der Grenzfläche zu der Probenlösung, möglichst nahe dem Wert der Oberflächenspannung der Probenlösung an dieser Grenzfläche annähert. Auf diese Weise kann allein durch diese Maßnahme die Dosiereinheit wirksam verkleinert und damit die Meßgenauigkeit der Titration signifikant vergrößert werden.

Erfahrungsgemäß lassen sich mit der beschriebenen Methode vorteilhaft Tröpfchen mit Volumina im Bereich von etwa 2 bis 3 Mikroliter erzielen.

Gemäß einem dritten Aspekt der Erfindung ist eine gravimetrische Titrationsvorrichtung vorgesehen, die ein Gefäß zur Aufnahme einer Probenlösung und eine Kapillare zur definierten Zuführung einer Maßlösung in die Probenlösung aufweist. Dabei wird während der eigentlichen Titration, also während des Zuführens der Maßlösung in die Probenlösung, ein offenes Ende der Kapillare in die Probenlösung eingetaucht gehalten.

Die gravimetrische Titrationsvorrichtung ist erfindungsgemäß durch eine Pumpe, beispielsweise eine Schlauchpumpe gekennzeichnet, mit der die Maßlösung in die Probenlösung befördert wird.

Gemäß einem vierten Aspekt der Erfindung ist ein gravimetrisches Titrationsverfahren vorgesehen, bei dem eine Maßlösung in definierter Weise mithilfe einer Kapillare einer Probenlösung zugegeben wird. Dabei wird ein offenes Ende der Kapillare, durch welches die Maßlösung in die Probenlösung austritt, während der eigentlichen Titration - also während der Zugabe von Maßlösung - in die Probenlösung eingetaucht gehalten. Das Verfahren ist dadurch gekennzeichnet, dass die Zugabe durch Pumpen erfolgt.

Weitere Merkmale, Vorteile und Eigenschaften werden nunmehr anhand einer detaillierten Beschreibung von Ausführungsbeispielen und Bezug nehmend auf die Figuren der beigefügten Zeichnungen erläutert. Es zeigen:
Fig. 1 eine schematische Darstellung einer erfindungsgemäße Titrationsvorrichtung,
Figuren 2 a und 2 b jeweils eine schematische Darstellung des räumlichen Gebiets um den Auslass der Kapillare mit Rührer in zwei unterschiedlichen Varianten,
Fig. 3 eine schematische Darstellung einer alternativen erfindungsgemäße Titrationsvorrichtung,
Fig. 4 eine schematische Darstellung eines Ausführungsbeispiels mit automatischem Probenwechsler, und
Fig. 5 ein weiteres Ausführungsbeispiel mit einem automatischen Probenwechsler.

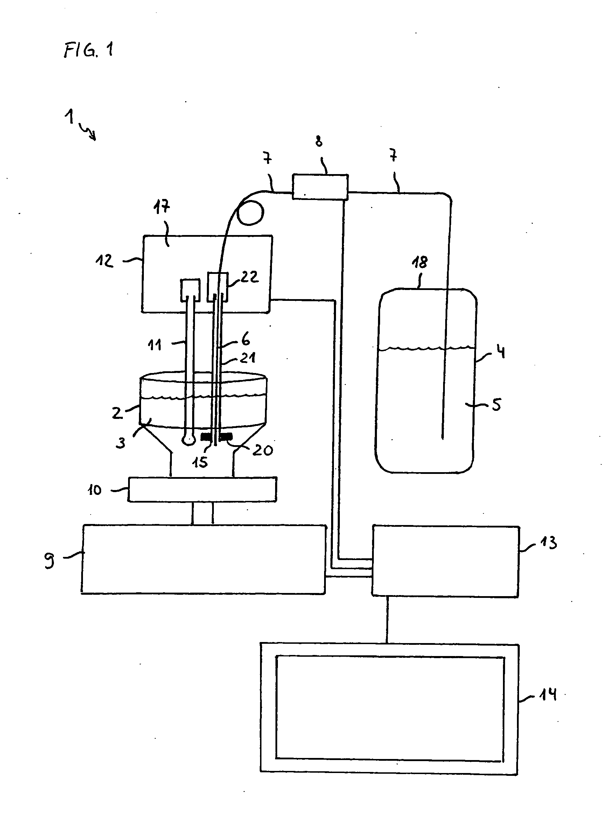

Fig. 1 zeigt in schematischer Form eine erfindungsgemäße Titrationsvorrichtung 1. Diese weist ein Gefäß 2 zur Aufnahme einer Probenlösung 3 und einen Vorratsbehälter 4 zur Aufnahme einer Maßlösung 5 auf. Die gesamte Titrationsvorrichtung 1 ist vorteilhaft von Abdeckwänden umgeben, die insbesondere als Windschutz fungieren.

Zur Zuführung der Maßlösung 5 in die Probenlösung 3 dienen insbesondere ein Schlauch 7, eine in den Schlauch 7 eingebundene Schlauchpumpe 8 und eine Kapillare 6. Die Kapillare 6 ist während des Titrationsvorgangs mit einem offenen Ende, das als Auslass 15 für die Maßlösung 5 dient, in die Probenlösung 3 eingetaucht. Die Kapillare 6 ist an ihrem oberen Ende mit dem Schlauch 7 zusammengesteckt (in der Figur nicht dargestellt). Es ist auch möglich, den Schlauch 7 und die Kapillare 6 einstückig, beispielsweise in Form einer Schlauch-Kapillare, auszubilden.

Der Vorratsbehälter 4 ist so gehaltert, dass er leicht und schnell ausgetauscht werden kann. Vorteilhaft ist er zusammen mit dem angrenzenden Teil des Schlauchs 7 und einem Deckel 18 als eine echte Einheit ausgebildet, die mittels einer Kupplung (in der Figur nicht dargestellt) mit dem restlichen Teil des Schlauchs 7 oder direkt mit der Schlauchpumpe 8 verbunden werden kann. Auf diese Weise läßt sich ein einfacher Austausch der Maßlösung realisieren.

Der Vorratsbehälter 4 ist weiterhin abgedeckt, um die Verdunstung von Maßlösung 5 möglichst einzudämmen oder vollständig zu verhindern. Eine luftdurchlässige Membran oder Filtereinheit in dem Deckel 18 erlaubt ein Nachströmen von Luft in das Innere des Vorratsbehälters 4 bei sinkendem Pegel der Maßlösung 5 während der Titration.

Die Schlauchpumpe 8 dient zur definierten Zuführung von Maßlösung 5 in die Probenlösung 3. Die Schlauchpumpe 8 ist dabei dazu ausgelegt, eine kontinuierliche und gleichmäßige Förderung der Maßlösung 5 mit einstellbarer Förderrate zu ermöglichen. Auch muss bei der Schlauchpumpe 8 eine im Hinblick auf die gewünschte Genauigkeit geeignete Förder-Geschwindigkeit einstellbar sein.

In Bezug auf das Gefäß 2 kann die Kapillare 6 derart gehaltert sein, dass sie mit dem Auslass 15 in die Probenlösung 3 eingetaucht ist. Dazu dient insbesondere eine Lift-Vorrichtung 12, wobei die Kapillare 6 in ihrem Bereich, der sich oberhalb des Auslasses 15 befindet, mit der Lift-Vorrichtung 12 über eine Lift-Platte 17 verbunden ist.

Die Lift-Vorrichtung 12 dient weiterhin dazu, die Kapillare 6 so zu bewegen, dass der Auslass 15 der Kapillare 6 aus der in die Probenlösung 3 eingetauchten Position nach oben aus der Probenlösung 3 herausgehoben bzw. herausgefahren werden kann und umgekehrt von oben kommend, so weit abgesenkt werden kann, bis er in die Probenlösung 3 eingetaucht ist.

Vorteilhaft erlaubt der Lift dabei ein Anheben des Auslasses 15 bis deutlich oberhalb der Oberkante des Gefäßes 2. Auf diese Weise wird ein besonders leichter Wechsel des Gefäßes 2 bzw. der darin befindlichen Probenlösung 3 ermöglicht. Vorteilhaft weist der Lift wenigstens mehrere Höhenstufen auf, in denen der Auslass 15 fixiert werden kann. Auf diese Weise kann in Abhängigkeit der Menge an Probenlösung 3, die sich in dem Gefäß 2 befindet, eine geeignete Höhenposition gewählt bzw. eingestellt werden. Weiterhin vorteilhaft ist der Lift elektrisch einstellbar ausgestaltet. Die Hub-Amplitude der Lift-Vorrichtung 12 kann beispielsweise circa 10 cm betragen.

Die Lift-Vorrichtung 12 trägt neben der Kapillare 6 auch eine Mess-Elektrode 11, beispielsweise in Form einer Einstab-Elektrode, die an ihrem unteren Ende einen Messfühler aufweist, der zur Erfassung des pH-Wertes dient und auch ionen-sensitiv ist. Auch ein Temperatursensor ist in dem Meßfühler integriert.

Die Mess-Elektrode 11 ist dabei vorteilhaft über die Lift-Platte 17 derart mit der Lift-Vorrichtung 12 verbunden, dass ihr Meßfühler etwa auf gleicher Höhe wie der Auslass 15 der Kapillare 6 angeordnet ist, so dass sowohl der Messfühler als auch der Auslass 15 durch den Lift in die Probenlösung 3 eingetaucht werden können und andersherum aus der Probenlösung 3 nach oben herausgehoben bzw. - gefahren werden können.

Die Mess-Elektrode 11 dient insbesondere zur Erfassung des pH-Wertes der Probenlösung 3 während der Titration. Dadurch wird die Bestimmung eines vom pH-Wert abhängigen Äquivalenzpunktes bei der Titration möglich.

Alternativ sind auch andere - an sich bekannte - Methoden zur Bestimmung des Äquivalenzpunktes einsetzbar. Beispielsweise kann hierzu eine EMK-Messung dienen (EMK: elektromotorische Kraft).

Die Titrationsvorrichtung 1 dient zur Durchführung einer gravimetrischen Titration. Dazu ist weiterhin insbesondere ein Waagen-Modul 9 mit einer Waagschale 10 vorgesehen. Die Waagschale 10 dient zur Aufnahme des Gefäßes 2 mit der darin befindlichen Probenlösung 3. Die Waage des Waagen-Moduls 9 dient zur Erfassung der Gewichtszunahme der in dem Gefäß 2 befindlichen Flüssigkeit, die durch das Zugeben von Maßlösung 5 in die Probenlösung 3 hervorgerufen wird. Die Auflösung der Waage ist dabei vorteilhaft so hoch gewählt, dass die Bestimmung des Äquivalenzpunktes mit der gewünschten Genauigkeit ermöglicht wird.

Die Lift-Vorrichtung 12 ist unabhängig von dem Waagen-Modul 9 gehaltert. Die Lift-Vorrichtung 12 steht also beispielsweise auf derselben Unterlage wie das Waagen-Modul 9. Insbesondere ist die Lift-Vorrichtung 12 nicht auf die Waagschale 10 des Waagen-Moduls 9 gestellt.

Der Schlauch 7 ist - wie in Fig. 1 durch eine Schleife angedeutet - zwischen der Schlauchpumpe 8 und der Fixierung an der Lift-Platte 17 derart mit Spiel gehalten, dass der Lift ohne vorherige Demontage des Schlauchs 7 betrieben werden kann.

Die Schlauchpumpe 8, die Lift-Vorrichtung 12 und das Waagen-Modul 9 sind zur Ansteuerung und zum Datenaustausch mit einem Elektronik-Modul 13 verbunden, wie in Fig. 1 durch Verbindungslinien angedeutet. Das Elektronik-Modul 13 ist weiterhin mit einem Display 14 verbunden, an dem die Vorgänge an der Schlauchpumpe 8, der Lift-Vorrichtung 12 usw. zur Kontrolle des Titrationsvorgangs optisch dargestellt werden können. Insbesondere kann an dieser Stelle auch eine Titrationskurve angezeigt werden.

Die Funktionsweisen von Elektronik-Modul 13 und Display 14 sind als solche aus dem Stand der Technik bekannt und werden daher im Rahmen dieser Beschreibung nicht näher erläutert.

Erfindungsgemäß weist die Titrationsvorrichtung 1 eine Rührer-Einheit 20, 21, 22 auf, die einen Rührer 20, eine Hohlwelle 21 und einen Motor 22 zum Antrieb des Rührers 20 über die Hohlwelle 21 aufweist. Der Rührer 20 ist dabei am unteren Ende der Hohlwelle 21 befestigt. Die Rührer-Einheit 20, 21, 22 ist in ihrem oberen Bereich mit der Lift-Vorrichtung 12 verbunden und wird auf diese Weise zusammen mit dem Auslass 15 der Kapillare 6 von der Lift-Vorrichtung 12 in der gewünschten bzw. eingestellten Position gehalten. Weiterhin kann die Rührer-Einheit 20, 21, 22 - ebenfalls zusammen mit der Kapillare 6 - mithilfe des Lifts, wie oben beschrieben, nach oben und unten gefahren werden. Insbesondere ist die Befestigung der Rührer-Einheit 20, 21, 22 an der Lift-Vorrichtung 12 so gewählt, dass der Rührer 20 auf einem Niveau gehalten werden kann, in dem er vollständig in die Probenlösung 3 eingetaucht ist.

Wie oben bereits erwähnt, ist die Lift-Vorrichtung 12 derart ausgebildet, dass in Abhängigkeit der Menge an Probenlösung 3 in dem Gefäß 2 geeignete Höhenpositionen des Auslasses 15 eingestellt werden können. Dies gilt natürlich auch im Hinblick auf geeignete Höhenpositionen des Rührers 20 in der Probenlösung 3.

Die Kapillare 6 ist durch die Hohlwelle 21 der Rührer-Einheit 20, 21, 22 geführt und relativ zu ihr fixiert. Eine Halterung hierfür kann beispielsweise im Bereich des oberen Endes der Hohlwelle 21 vorgesehen sein.

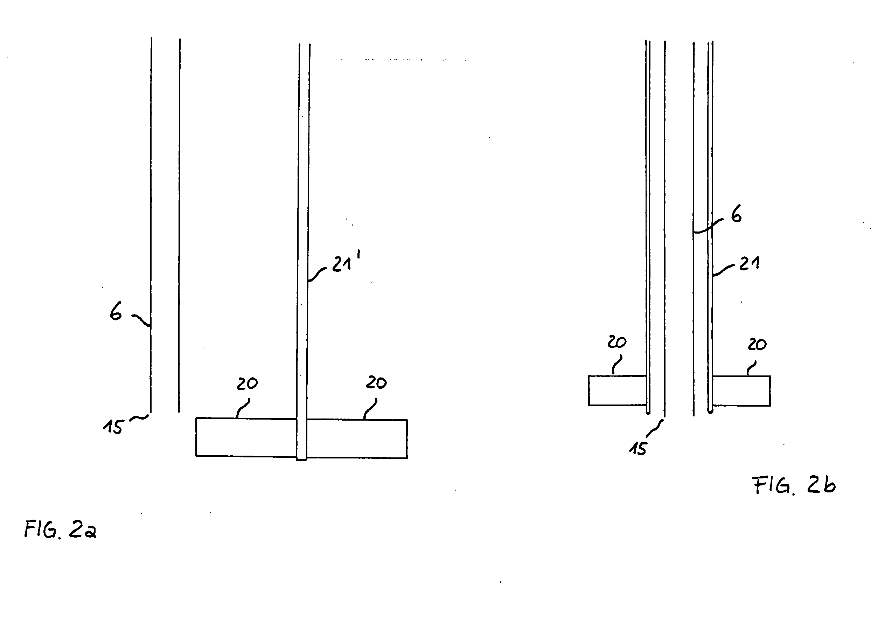

Der Auslass 15 der Kapillare 6 ist dabei so weit in die Hohlwelle 21 gesteckt, dass er sich im unmittelbaren Höhenbereich des Rührers 20 befindet. Dies ist in Fig. 2 b schematisch in vergrößerter Form dargestellt. Vorteilhaft liegt dabei der Auslass 15 der Kapillare 6 auf Höhe der Unterkante des Rührers 20 oder minimal unterhalb von dieser.

Die Abmessungen der Rührer-Einheit 20, 21, 22 und der Kapillare 6 sind vorteilhaft so gewählt, dass sich insbesondere der Innendurchmesser der Hohlwelle 21 möglichst wenig von dem Außendurchmesser der Kapillare 6 unterscheidet. Auf diese Weise kann der Rührer 20 in unmittelbarer Nähe vom Auslass 15 der Kapillare 6 angeordnet werden. In Fig. 2 b ist demgegenüber ein gewisser Abstand zwischen der Kapillare 6 und der Innenwand der Hohlwelle 21 dargestellt, dies jedoch lediglich zur verdeutlichten getrennten Darstellung der betreffenden Teile.

Eine bevorzugte alternative Anordnung von der Kapillare 6 mit ihrem Auslass 15 und dem Rührer 20 ist in Fig. 2 a schematisch dargestellt. Dabei befindet sich der Rührer 20 neben dem Auslass 15 der Kapillare 6. Der Rührer 20 kann auch unterhalb des Auslasses 15 angeordnet sein. Konstruktionstechnisch ist die Variante gemäß Fig. 2 a derjenigen aus Fig. 2 b vorzuziehen. Bei der Ausführung gemäß Fig. 2 a ist auch keine Hohlwelle 21 erforderlich, sondern es kann eine einfache Welle 21' verwendet werden.

Gemäß Fig. 2 a ist die Welle 21' etwa parallel zur Kapillare 6 im Bereich des Auslasses 15 angeordnet. Diesbezüglich ist jedoch auch eine anderweitige Anordnung möglich. Beispielsweise kann die Welle 21' des Rührers 20 etwa im rechten Winkel zu dem besagten Kapillaren-Abschnitt angeordnet sein.

Vorteilhaft ist der Rührer 20 derart geformt, dass er einen oder mehrere Rührflügel aufweist. Durch die Ausgestaltung einzelner Flügel lässt sich das angestrebte Abschlagen der Tröpfchenansätze und die turbulente Vermischung besonders gut und effizient realisieren.

Die Abmessungen und die Umdrehungszahl des Rührers 20 sind so gewählt, dass durch den eingeschalteten Rührer 20 eine Vermischung in Form einer turbulenten Verwirbelung der Flüssigkeit im unmittelbaren Bereich des Auslasses 15 bewirkt werden kann. Ziel der Verwirbelung ist es also, dass die Tröpfchenansätze, die sich am Auslass 15 der Kapillare 6 im Zuge der Titration bei eingeschalteter Schlauchpumpe 8 aufgrund der Oberflächenspannung der zugeführten Maßlösung 5 bilden, durch die von der Rührer-Aktivität hervorgerufene Verwirbelung der Flüssigkeit am Auslass 15 abgeschlagen werden, bevor sie sich von alleine vollständig ausbilden und als komplette Tröpfchen in die Probenlösung 3 vordringen würden.

In diesem Sinne ist unter der Formulierung "in unmittelbarer Nachbarschaft" oder "im unmittelbaren Bereich" des Auslasses 15 der Kapillare 6 im Rahmen dieser Beschreibung ein Bereich zu verstehen, dessen Durchmesser dieselbe Größenordnung hat, wie die sich bildenden Tröpfchenansätze oder - in diesem Zusammenhang gleichbedeutend - wie der Innendurchmesser der Kapillare 6 im Bereich des Auslasses 15. Beispielsweise kann der Durchmesser des Rührers 20 etwa zehnmal oder auch zwanzigmal so groß gewählt sein wie der Innendurchmesser der Kapillare 6 im Bereich des Auslasses 15.

Als günstig haben sich in der Praxis Werte im Bereich von etwa 0,1 bis 1,0 Millimeter für den Innendurchmesser der Kapillare 6 herausgestellt.

Durch das beschriebene Abschlagen der Tröpfchenansätze kann eine derart kleine Dosiereinheit erzielt werden, dass von einer "quasi-stufenlose" Zufuhr von Maßlösung 5 gesprochen werden kann.

Des Weiteren bringt es diese besonders kleine Dosiereinheit in Verbindung mit der Rührer-Aktivität mit sich, dass die zugeführte Maßlösung 5 besonders schnell und effizient mit der Probenlösung 3 im Sinne eines "Homogenisierens" verbunden werden kann. Dies wirkt sich wiederum vorteilhaft auf das Ergebnis der Titration aus, weil - wie eingangs bemerkt - dabei vorauszusetzen ist, dass die zugrunde liegende Reaktion ausreichend schnell verläuft.

Im Folgenden wird der Titrationsvorgang anhand einer Säure-Basen-Titration kurz erläutert. Im Rahmen der Erfindung kann ein andersartiger Titrationsvorgang analog und insbesondere für den Fachmann in eindeutig übertragbarer Weise erfolgen.

Zur Titration werden zunächst die Probenlösung 3 mit der zu bestimmenden Menge an gelöster Substanz in das Gefäß 2 und die Maßlösung 5 in den Vorratsbehälter 4 gegeben. Dazu ist der Lift so eingestellt, dass der Auslass 15 der Kapillare 6 und mit diesem der Rührer 20 und der Messfühler der Mess-Elektrode 11 in ihrer oberen Position, also außerhalb des Gefäßes 3 gehalten sind. In dieser Position wird die Menge bzw. Masse der Probenlösung 3 mittels Wiegen mit dem Waagen-Modul 9 gemessen.

Im nächsten Schritt wird der Lift betätigt, so dass der Auslass 15 der Kapillare 6 und mit diesem der Rührer 20 und der Messfühler der Mess-Elektrode 11 vollständig in die Probenlösung 3 eingetaucht werden und in dieser eingetauchten Position gehalten werden. In dieser Position wird nochmals das Gewicht auf der Waagschale 10 gemessen. Durch die archimedischen Auftriebskräfte der eingetauchten Teile stellt sich nunmehr in der Regel ein anderes Gewicht als bei der ersten Messung ein.

Als nächstes kann die eigentliche Titration, also das Zuführen der Maßlösung 5 beginnen. Dazu kann zunächst der Rührer 20 und dann die Schlauchpumpe 8 eingeschaltet werden. Auch die Mess-Elektrode 11 ist nun einzuschalten. Im Laufe der Zuführung der Maßlösung 5 kann die Gewichtszunahme mittels des Waagen-Moduls 9 kontinuierlich erfasst werden. Außerdem lässt sich mit der Mess-Elektrode 11 der pH-Wert der Flüssigkeit im Gefäß 2 kontinuierlich erfassen. Auf diese Weise kann die Titrationskurve erstellt und auf dem Display 14 optisch dargestellt werden.

Erfindungsgemäß ist die Dosiereinheit - wie oben dargestellt - im Vergleich zu einer gravimetrischen Titration nach dem Stand der Technik besonders klein, so dass höchsten Genauigkeitsanforderungen entsprochen werden kann.

Mithilfe der Mess-Elektrode 11 lässt sich das Erreichen des Äquivalenzpunktes präzise feststellen.

Schließlich liegen alle notwendigen Angaben zur Bestimmung der Maßanalyse, also zur Bestimmung der Menge der ursprünglich in der Probenlösung 3 gelösten Substanz vor und das Ergebnis kann auf dem bekannten Weg berechnet werden.

Es ist nicht notwendig, die Auftriebskräfte, die durch das Eintauchen von Kapillare 6, Teilen der Rührer-Einheit und der Elektrode 11 in die Probenlösung 3 entstehen und berücksichtigt werden müssen, bei jedem neuen Titrationsvorgang neu auszumessen. Vielmehr können sie unter Zuhilfenahme einer Eichlösung in Abhängigkeit der Eintauchtiefe einmal bestimmt und die so ermittelten Werte dann bei verschiedenen Titrationsvorgängen verwendet werden.

Mit der beschriebenen Vorrichtung bzw. der beschriebenen Methode lässt sich eine Dosiereinheit von 4 bis 6 Mikroliter Tröpfchenvolumen erzielen. Dies entspricht 4 bis 6 Milligramm Masse bei Wasser.

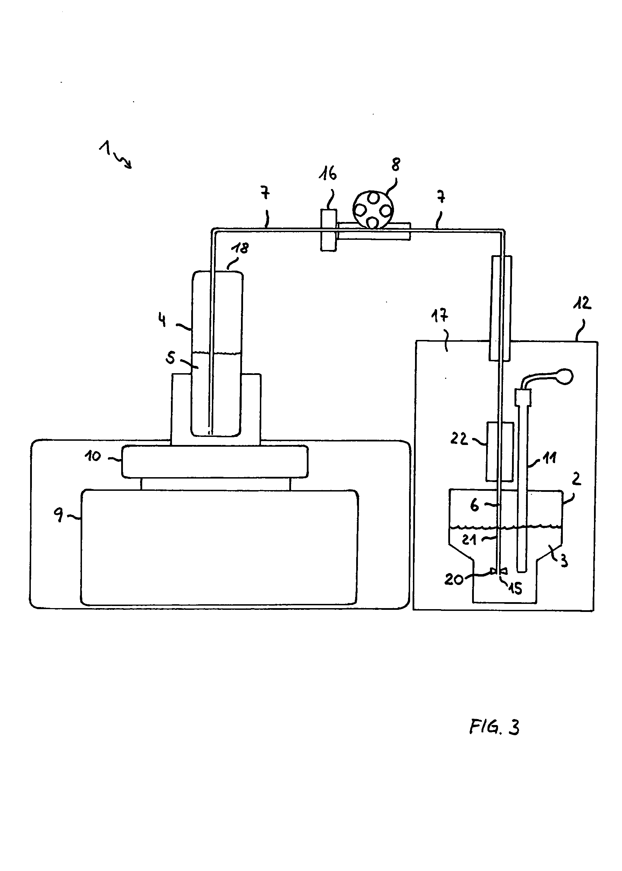

Eine bevorzugte alternative Anordnung der erfindungsgemäßen Titrationsvorrichtung ist in Fig. 3 schematisch dargestellt. In der folgenden Erläuterung der Fig. 3 wird nur auf die Unterschiede zu der entsprechenden Anordnung gemäß Fig. 1 eingegangen.

Das Elektronik-Modul 13 und das Display 14 sind in Fig. 3 der besseren Übersichtlichkeit halber nicht dargestellt, jedoch analog zu der Anordnung gemäß Fig. 1 vorgesehen.

Gemäß der Anordnung in Fig. 3 wird die Menge der zugegebenen Maßlösung 5 dadurch bestimmt, dass der Vorratsbehälter 4 mit der Maßlösung 5 während der Titration auf dem Waagen-Modul 9 steht und auf diese Weise kontinuierlich gewogen werden kann.

Im Vergleich zu der eingangs erwähnten Anordnung gemäß der US 3,438,736 weist die erfindungsgemäße Anordnung gemäß Fig. 3 jedoch zwei grundlegende Unterschiede auf: Zum einen wird - in Übereinstimmung mit den obigen Darstellungen - die Probenlösung 3 im unmittelbaren Bereich des Auslasses 15 der Kapillare 6 durch den Rührer 20 gemischt. Zum anderen erfolgt die Zufuhr der Maßlösung 5 nicht passiv unter ausschließlicher Nutzung der Schwerkraft, sondern in aktiver Weise mittels der Schlauchpumpe 8. Erst durch Einsatz der Schlauchpumpe 8 wird - im Gegensatz zu dem genannten Stand der Technik - eine gleichförmige und vor allem steuer- bzw. regelbare Zufuhr von Maßlösung 5 ermöglicht.

Wichtig ist hierbei, dass die Vibrationen, die durch die eingeschaltete Schlauchpumpe 8 entstehen können, gegenüber dem Waagen-Modul 9 gedämpft werden. Dazu ist vorgesehen, dass der Schlauch 7 mit einer Fixier-Vorrichtung 16 gehalten wird, so dass keine Vibrationen zu dem empfindlichen Waagen-Modul 9 übertragen werden können. Die Fixier-Vorrichtung 16 befindet sich dazu zwischen dem Vorratsbehälter 4 und der Schlauchpumpe 8. Der Schlauch 7 zwischen Fixier-Vorrichtung 16 und Vorratsbehälter 4 ist derart mit Spiel bemessen, dass der Wiege-Vorgang dadurch nicht beeinflusst wird.

Ein Vorteil der Ausführungsform gemäß Fig. 3 gegenüber derjenigen gemäß Fig. 1 ist dadurch gegeben, dass keine Kompensation der Auftriebskräfte erfolgen muss, die durch das Eintauchen von Rührer, Kapillare und Elektrode entstehen, denn diese befinden sich in dem Probengefäß 2, das sich hierbei nicht auf der Waage befindet.

Bei dem Ausführungsbeispiel gemäß Fig. 3 ist bevorzugt der Vorratsbehälter 4 mit dem ersten Stück des anschließenden Schlauchs 7 (vor der Schlauchpumpe 8) als eine Einheit ausgebildet. Diese Einheit ist mittels einer Kupplung (in der Figur nicht dargestellt)im Schlauch 7 mit dem restlichen Teil des Schlauchs 7 oder direkt mit der Schlauchpumpe 8 verbunden. Dies hat bedienungstechnische Vorteile. Der Vorratsbehälter 4 mit dem anschließenden Stück Schlauch 7 kann dadurch besonders leicht ausgewechselt werden.

Die Lift-Vorrichtung 12 ist analog zu der Ausführung gemäß Fig. 1 gestaltet.

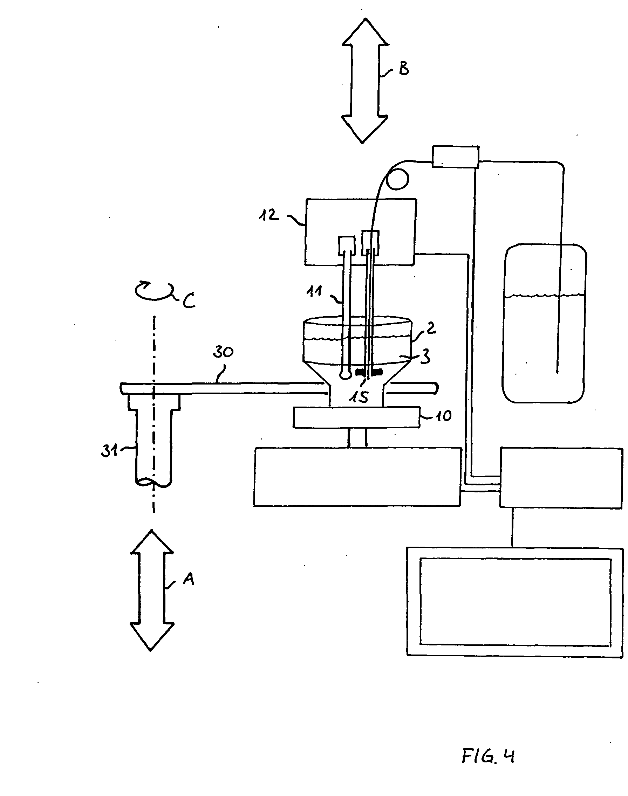

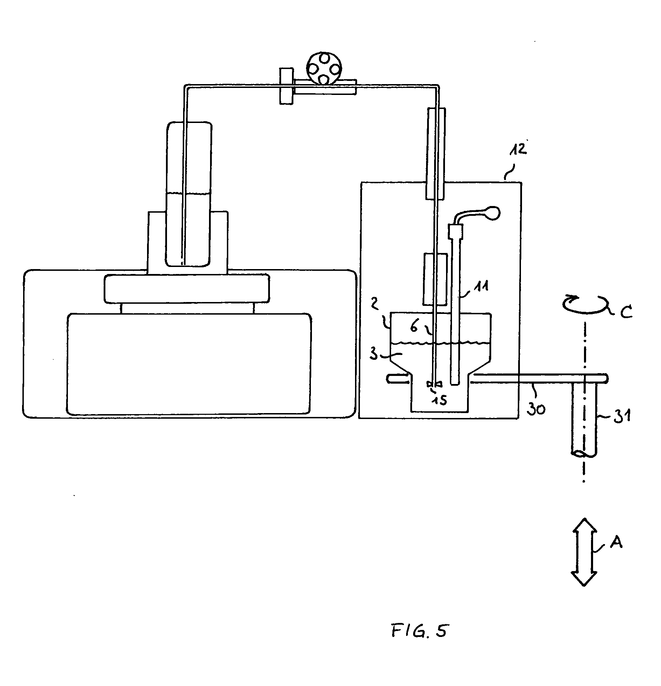

Gemäß den Darstellungen der Figuren 4 und 5 kann weiterhin erfindungsgemäß ein automatischer Probenwechsler vorgesehen sein. Dieser ermöglicht insbesondere eine weitergehende Verbesserung der Bedienungsmöglichkeit der erfindungsgemäßen Vorrichtung.

Fig. 4 gibt die wesentlichen Elemente der Fig. 1 wieder und zeigt darüber hinaus schematisiert ein Ausführungsbeispiel für einen solchen automatischen Probenwechsler. Dieser weist einen Trägerarm 30 und ein Bewegungselement 31 auf. (Die Bezugszeichen-Angaben der bereits bei Fig. 1 beschriebenen Teile sind der besseren Übersichtlichkeit halber in Fig. 4 reduziert.)

Gemäß diesem Ausführungsbeispiel ist vorgesehen, dass der automatische Probenwechsler mit der Lift-Vorrichtung 12 koordinativ zusammenwirkt. In der Ausgangsstellung eines Probenbearbeitungs-Zyklus ist dabei der Lift in die obere Position gefahren (vgl. Pfeil "B"). Dann wird mithilfe des Trägerarms 30 und des Bewegungselements 31 ein Probengefäß 2 automatisch auf die Waagschale 10 gestellt. Daraufhin wird der Lift in seine untere Position gefahren, so dass der Auslass 15 der Kapillare und die Mess-Elektrode 11 in die Probenlösung 3 eintaucht. In dieser Position wird die Rührung und die Reagenzzuführung durchgeführt. Nach Beendigung dieses Vorgangs fährt der Lift wieder in seine obere Position, so dass mithilfe des Trägerarms 30 und des Bewegungselements 31 der Probenbehälter 2 von der Waagschale 10 gehoben und beiseite gestellt werden kann. Damit ist ein Probenbearbeitungs-Zyklus abgeschlossen und ein weiterer Zyklus kann beginnen, indem mit dem automatischen Probenwechsler das nachfolgende Probengefäß auf die Waagschale 10 gehoben wird.

Wie durch die Pfeile "A" und "C" angedeutet, ist dabei für das Bewegungselement 31 vorzugsweise sowohl eine Hoch-tief-Bewegung (durch eine zweite Lift-Vorrichtung), als auch eine rotatorische Bewegung vorgesehen.

Auf diese Weise wird also ermöglicht, dass mehrere Bearbeitungs-Zyklen hintereinander vollautomatisiert erfolgen. Die Steuerung kann dabei im Elektronik-Modul integriert sein und vorzugsweise unter Zuhilfenahme der Signale von der Waage erfolgen. Entsprechende Angaben zum Ablauf können für Überwachungszwecke vorteilhaft auf dem Display angezeigt werden.

Fig. 5 zeigt eine weitere Variante des automatischen Probenwechslers, wie sie vorteilhaft in Verbindung mit dem Ausführungsbeispiel gemäß Fig. 3 vorgesehen sein kann. Der Bewegungsablauf erfolgt dabei analog zu der erstgenannten Variante.

Als weitere Alternative kann erfindungsgemäß eine Kombination der Anordnungen gemäß Fig. 1 und Fig. 3 vorgesehen sein, in dem Sinne, dass zwei Waagen verwendet werden, wobei eine Waage zur Erfassung der Gewichtsabnahme der Flüssigkeit im Vorratsbehälter 4 und die zweite Waage zur Erfassung der entsprechenden Gewichtszunahme der Flüssigkeit im Probengefäß 2 dient. Damit lassen sich zwei prinzipiell redundante Messungen ausführen, was eine weitere Steigerung der Genauigkeit ermöglicht. Insbesondere können mit dieser Methode möglicherweise auftretende Verluste an Maßlösung erfasst und im Weiteren berücksichtigt werden. Derartige Verluste könne beispielsweise aufgrund von Verdunstungsvorgängen auftreten.

Bei allen beschriebenen Anordnungen kann die Dosiereinheit noch weitergehend dadurch verringert werden, dass der Maßlösung 5 vorab ein Benetzungsmittel zugesetzt wird. Durch das Benetzungsmittel verringert sich die Oberflächenspannung der Maßlösung 5 und die Tröpfchenansätze lösen sich schon allein aufgrund dieser Maßnahme leichter am Auslass 15 von der Kapillare 6. Die Tröpfchenansätze erreichen also bei Verwendung des Benetzungsmittels nicht die Größe, die sie ohne Verwendung des Benetzungsmittels erreichen würden und lösen sich somit frühzeitiger von der Kapillare 6. Auf diese Weise kann die Dosiereinheit effektiv verringert werden.

Somit ist das Zusetzen von Benetzungsmittel eine Maßnahme, die bereits für sich genommen, also insbesondere auch ohne Verwendung des oben beschriebenen Rührers dazu geeignet ist, die Dosiereinheit zu verkleinern.

Besonders vorteilhaft lassen sich die Maßnahmen "Rühren" einerseits und "Zugabe von Benetzungsmittel" andererseits in Kombination anwenden.

Auf diese Weise kann ein Tröpfchenvolumen von ca. 2 bis 3 Mikroliter erreicht werden. Das bedeutet bei einer Maßlösung von 0,1 N (Normalität) mit circa 1 bis 5 Milligramm Äquivalent (Masse von HCl und HBr) pro Milliliter eine Erfassungsgrenze von circa 3 bis 15 Mikrogramm. Diese Werte können insbesondere mittels volumetrischer Titration nicht erreicht werden.

Die Vorteile der Erfindung lassen sich wie folgt zusammenfassen:
- Durch die Erfindung kann bei der Titration eine besonders kleine Dosiereinheit realisiert werden. Damit wird eine quasi-stufenlose Zufuhr von Maßlösung ermöglicht.
- Bei der Verbindung von Probenlösung und Maßlösung wird ein besonders schnelles und effizientes Homogenisieren ermöglicht.
- Die Zufuhr von Maßlösung in die Probenlösung kann gesteuert erfolgen.
- Die Erfassung der zugegebenen Menge an Maßlösung ist mit besonders großer Genauigkeit möglich.

Die Erfindung ermöglicht eine besonders
bedienungsfreundliche Ausgestaltung.

MLS Mikrowellen-Labor-Systeme GmbH / Precisa Instruments AG P28721EP

### Bezugszeichenliste

- 1: Titriereinrichtung
- 2: Gefäß für Probenlösung
- 3: Probenlösung
- 4: Vorratsbehälter für Maßlösung
- 5: Maßlösung
- 6: Kapillare
- 7: Schlauch
- 8: Schlauchpumpe
- 9: Waagenmodul
- 10: Waagschale
- 11: Mess-Elektrode
- 12: Lift-Vorrichtung
- 13: Elektronik-Modul
- 14: Display
- 15: Auslass
- 16: Schlauch-Fixiervorrichtung
- 17: Lift-Platte
- 18: Deckel für Vorratsbehälter
- 20: Rührer
- 21: Hohlwelle
- 21': Welle
- 22: Motor

## Patentansprüche

1. Titrationsvorrichtung (1), aufweisend
- ein Gefäß (2) zur Aufnahme einer Probenlösung (3), und
- eine Kapillare (6) zur definierten Zuführung einer Maßlösung (5) in die Probenlösung (3), wobei während der Titration ein offenes Ende (15) der Kapillare (6) in die Probenlösung (3) eingetaucht gehalten ist,
**gekennzeichnet durch**
- eine Rührvorrichtung (20) zum Mischen der Probenlösung (3) im unmittelbaren Austrittsbereich der Maßlösung (5) aus dem offenen Ende (15) der Kapillare (6).

2. Titrationsvorrichtung nach Anspruch 1,
**dadurch gekennzeichnet,**
**dass** die Rührvorrichtung ein Rührer (20) ist.

3. Titrationsvorrichtung nach Anspruch 1 oder 2,
**dadurch gekennzeichnet,**
**dass** die Rührvorrichtung (20) auf einer Hohlwelle (21) gelagert und die Kapillare (6) durch die Hohlwelle (21) geführt ist.

4. Titrationsvorrichtung nach einem der Ansprüche 1 bis 3, **gekennzeichnet**
**durch** eine Pumpe (8) zur Beförderung der Maßlösung (5) durch die Kapillare (6).

5. Titrationsvorrichtung nach Anspruch 4,
**dadurch gekennzeichnet,**
**dass** die Pumpe eine Schlauchpumpe (8) ist.

6. Titrationsvorrichtung nach einem der vorhergehenden Ansprüche,
**gekennzeichnet**
**durch** eine Waage (9) zum Wiegen des Gefäßes (2) mit der darin befindlichen Probenlösung (3) und dem zugesetzten Teil an Maßlösung (5).

7. Titrationsvorrichtung nach einem der vorhergehenden Ansprüche,
**gekennzeichnet**
**durch** einen Vorratsbehälter (4) zur Aufnahme der Maßlösung (5) und eine weitere Waage zum Wiegen des Vorratsbehälters (4) mit der darin befindlichen Maßlösung (5).

8. Titrationsvorrichtung nach einem der vorhergehenden Ansprüche,
**dadurch gekennzeichnet,**
**dass** der Innendurchmesser der Kapillare (6) am offenen Ende (15) etwa 0,1 bis 1,0 Millimeter beträgt.

9. Titrationsvorrichtung nach einem der vorhergehenden Ansprüche,
**gekennzeichnet**
**durch** eine Mess-Elektrode (11) zur Bestimmung des pH-Wertes der Probenlösung (3).

10. Titrationsvorrichtung nach einem der vorhergehenden Ansprüche,
**dadurch gekennzeichnet,**
**dass** am Boden des Gefäßes (2) ein Magnetrührer vorgesehen ist.

11. Titrationsverfahren, bei dem eine definierte Zugabe einer Maßlösung (5) in eine Probenlösung (3) mithilfe einer Kapillare (6) erfolgt, wobei ein offenes Ende (15) der Kapillare (6) in die Probenlösung (3) eingetaucht ist,
**dadurch gekennzeichnet,**
**dass** die Probenlösung (3) im unmittelbaren Austrittsbereich der Maßlösung (5) aus dem offenen Ende (15) der Kapillare (6) gerührt wird.

12. Titrationsverfahren nach Anspruch 11,
**dadurch gekennzeichnet,**
**dass** die Zugabe durch Pumpen erfolgt.

13. Titrationsverfahren nach Anspruch 11 oder 12,
**dadurch gekennzeichnet,**
**dass** sich die Probenlösung (3) in einem Gefäß (2) befindet und die Menge der zugegebenen Maßlösung (5) dadurch ermittelt wird, dass die durch die Zugabe hervorgerufene Gewichtszunahme des Gefäß-Inhalts mittels Wiegen gemessen wird.

14. Titrationsverfahren nach einem der Ansprüche 11 bis 13,
**dadurch gekennzeichnet,**
**dass** sich die Maßlösung (5) in einem Vorratsbehälter (4) befindet und die Menge der zugegebenen Maßlösung (5) gegebenenfalls zusätzlich dadurch ermittelt wird, dass die durch die Zugabe hervorgerufene Gewichtsabnahme des Vorratsbehälter-Inhalts mittels Wiegen gemessen wird.

15. Titrationsverfahren nach einem der Ansprüche 11 bis 14,
**dadurch gekennzeichnet,**
**dass** der Maßlösung (5) vorab ein Benetzungsmittel zugesetzt wird.

16. Titrationsverfahren nach einem der Ansprüche 11 bis 15,
**dadurch gekennzeichnet,**
**dass** sich am offenen Ende (15) der Kapillare (6) lösende, aus Maßlösung (5) bestehende Tröpfchen ein Volumen im Bereich von etwa 2 bis 3 Mikroliter aufweisen.

17. Gravimetrische Titrationsvorrichtung (1), aufweisend
- ein Gefäß (2) zur Aufnahme einer Probenlösung (3),
- eine Kapillare (6) zur definierten Zuführung einer Maßlösung (5) in die Probenlösung (3), wobei während der Titration ein offenes Ende (15) der Kapillare (6) in die Probenlösung (3) eingetaucht gehalten ist,
**gekennzeichnet durch**
- eine Pumpe (8) zur Beförderung der Maßlösung (5) in die Probenlösung (3).

18. Gravimetrisches Titrationsverfahren, bei dem eine definierte Zugabe einer Maßlösung (5) in eine Probenlösung (3) mithilfe einer Kapillare (6) erfolgt, wobei ein offenes Ende (15) der Kapillare (6) in die Probenlösung (3) eingetaucht ist,
**dadurch gekennzeichnet,**
**dass** die Zugabe durch Pumpen erfolgt.

## Geänderte Patentansprüche

### Geänderte Patentansprüche gemäss Regel 86(2) EPÜ.

**1.** Titrationsvorrichtung (1), aufweisend
- ein Gefäß (2) zur Aufnahme einer Probenlösung (3), und
- eine Kapillare (6) zur definierten Zuführung einer Maßlösung (5) in die Probenlösung (3), wobei während der Titration ein offenes Ende (15) der Kapillare (6) in die Probenlösung (3) eingetaucht gehalten ist,
**gekennzeichnet durch**
- eine Rührvorrichtung (20) im unmittelbaren Austrittsbereich der Maßlösung (5) aus dem offenen Ende (15) der Kapillare (6).

**2.** Titrationsvorrichtung nach Anspruch 1,
**dadurch gekennzeichnet,**
**dass** die Rührvorrichtung ein Rührer (20) ist.

**3.** Titrationsvorrichtung nach Anspruch 1 oder 2,
**dadurch gekennzeichnet,**
**dass** die Rührvorrichtung (20) auf einer Hohlwelle (21) gelagert und die Kapillare (6) durch die Hohlwelle (21) geführt ist.

**4.** Titrationsvorrichtung nach einem der Ansprüche 1 bis 3,
**gekennzeichnet**
**durch** eine Pumpe (8) zur Beförderung der Maßlösung (5) durch die Kapillare (6).

**5.** Titrationsvorrichtung nach Anspruch 4,
**dadurch gekennzeichnet,**
**dass** die Pumpe eine Schlauchpumpe (8) ist.

**6.** Titrationsvorrichtung nach einem der vorhergehenden Ansprüche,
**gekennzeichnet**
**durch** eine Waage (9) zum Wiegen des Gefäßes (2) mit der darin befindlichen Probenlösung (3) und dem zugesetzten Teil an Maßlösung (5).

**7.** Titrationsvorrichtung nach einem der vorhergehenden Ansprüche,
**gekennzeichnet**
**durch** einen Vorratsbehälter (4) zur Aufnahme der Maßlösung (5) und eine weitere Waage zum Wiegen des Vorratsbehälters (4) mit der darin befindlichen Maßlösung (5).

**8.** Titrationsvorrichtung nach einem der vorhergehenden Ansprüche,
**dadurch gekennzeichnet,**
**dass** der Innendurchmesser der Kapillare (6) am offenen Ende (15) etwa 0,1 bis 1,0 Millimeter beträgt.

**9.** Titrationsvorrichtung nach einem der vorhergehenden Ansprüche,
**gekennzeichnet**
**durch** eine Mess-Elektrode (11) zur Bestimmung des pH-Wertes der Probenlösung (3).

**10.** Titrationsvorrichtung nach einem der vorhergehenden Ansprüche,
**dadurch gekennzeichnet,**
**dass** am Boden des Gefäßes (2) ein Magnetrührer vorgesehen ist.

**11.** Titrationsverfahren, bei dem eine definierte Zugabe einer Maßlösung (5) in eine Probenlösung (3) mithilfe einer Kapillare (6) erfolgt, wobei ein offenes Ende (15) der Kapillare (6) in die Probenlösung (3) eingetaucht ist,
**dadurch gekennzeichnet,**
**dass** die Probenlösung (3) im unmittelbaren Austrittsbereich der Maßlösung (5) aus dem offenen Ende (15) der Kapillare (6) gerührt wird.

**12.** Titrationsverfahren nach Anspruch 11,
**dadurch gekennzeichnet,**
**dass** die Zugabe durch Pumpen erfolgt.

**13.** Titrationsverfahren nach Anspruch 11 oder 12,
**dadurch gekennzeichnet,**
**dass** sich die Probenlösung (3) in einem Gefäß (2) befindet und die Menge der zugegebenen Maßlösung (5) dadurch ermittelt wird, dass die durch die Zugabe hervorgerufene Gewichtszunahme des Gefäß-Inhalts mittels Wiegen gemessen wird.

**14.** Titrationsverfahren nach einem der Ansprüche 11 bis 13,
**dadurch gekennzeichnet,**
**dass** sich die Maßlösung (5) in einem Vorratsbehälter (4) befindet und die Menge der zugegebenen Maßlösung (5) gegebenenfalls zusätzlich **dadurch** ermittelt wird, dass die durch die Zugabe hervorgerufene Gewichtsabnahme des Vorratsbehälter-Inhalts mittels Wiegen gemessen wird.

**15.** Titrationsverfahren nach einem der Ansprüche 11 bis 14,
**dadurch gekennzeichnet,**
**dass** der Maßlösung (5) vorab ein Benetzungsmittel zugesetzt wird.

**16.** Titrationsverfahren nach einem der Ansprüche 11 bis 15,
**dadurch gekennzeichnet,**
**dass** sich am offenen Ende (15) der Kapillare (6) lösende, aus Maßlösung (5) bestehende Tröpfchen ein Volumen im Bereich von etwa 2 bis 3 Mikroliter aufweisen.

**17.** Gravimetrische Titrationsvorrichtung (1), aufweisend
- ein Gefäß (2) zur Aufnahme einer Probenlösung (3),
- eine Kapillare (6) zur definierten Zuführung einer Maßlösung (5) in die Probenlösung (3), wobei während der Titration ein offenes Ende (15) der Kapillare (6) in die Probenlösung (3) eingetaucht gehalten ist,
**gekennzeichnet durch**
- eine Pumpe (8) zur kontinuierlichen Beförderung der Maßlösung (5) in die Probenlösung (3).

**18.** Gravimetrisches Titrationsverfahren, bei dem eine definierte Zugabe einer Maßlösung (5) in eine Probenlösung (3) mithilfe einer Kapillare (6) erfolgt, wobei ein offenes Ende (15) der Kapillare (6) in die Probenlösung (3) eingetaucht ist,
**dadurch gekennzeichnet,**
**dass** die Zugabe kontinuierlich durch Pumpen erfolgt.
